# EUROPEAN PATENT APPLICATION

(11) **EP 1 211 698 A1**
(43) Date of publication of application: **05.06.2002**
(21) Application number: 00939097.2
(22) Date of filing: 16.06.2000
(51) Int. Cl.: H01F 1/00, H01F 41/24, B22F 1/02

(54) **ORGANIC-INORGANIC COMPOSITE MAGNETIC MATERIAL AND METHOD FOR PREPARING THE SAME**

(30) Priority: 18.06.1999 JP 17339599
(71) Applicant: Japan Science and Technology Corporation, Kawaguchi-shi, Saitama 332-0012 (JP)
(72) Inventor: SUGAWARA, Tadashi, Setagaya-ku, Tokyo 157-0076 (JP); IZUOKA, Akira, Kawasaki-shi, Kanagawa 214-0005 (JP); SAKURAI, Hiromi, Itabashi-ku, Tokyo 174-0054 (JP)
(74) Representative: Wagner, Karl H., Dipl.-Ing.
(86) International application number: JP0003982
(87) International publication number: WO0079547

(57) **Abstract**

The present invention provided a method for manufacturing an organic-inorganic composite magnetic material which has organic radical molecules chemisorbed on the surface of a metal substance and exhibits super-paramagnetism or ferromagnetism. An ionic salt of a metal allowing thiol to be absorbed thereon is reduced with a reducing agent in the presence of a stabilizing ligand so as to form a soluble metal particle. The stabilizing ligand absorbed on the formed soluble metal particle is exchanged with a thiol-substituted organic radical having an unpaired electron so as to synthesize an organic-radical absorbed metal particle.

## Description

### TECHNICAL FIELD

The present invention relates to an organic-inorganic composite magnetic material produced by chemisorbing an organic magnetic material, particularly an organic radical, on the surface of a metal substrate serving as an inorganic component, and a method for manufacturing the same.

### BACKGROUND ART

An organic-inorganic composite material related to the present invention includes a gold particle having alkanethiol chemisorbed thereon. This gold particle can be synthesized by adding alkanethiol dissolved in an organic solvent into an ageous solution of hydrogen tetrachloroaurate and then adding a reducing agent in the presence of a surfactant. It is also known that the formed gold particle is desirably stabilized by virtue of the alkanethiol chemisorbed thereon.

Heretofore, various developments concerning functionalized gold particles having organic ligands have been attempted by taking advantage of the self-assembling property of gold particles having alkanethiol chemisorbed thereon (i.e. alkanethiol-chemisorbed gold particles). However, in the developments for functional materials composed of thiol-chemisorbed gold particles, any case focusing on a magnetic material has not been found. Consequently, there has not been any report of applying thiol-chemisorbed gold particles or other metal particles to a magnetic device as an organic-inorganic composite material.

In terms of the alkanethiol-chemisorbed gold particles as an organic-inorganic composite material, the following reports have heretofore been presented. As for synthesizing method, a report presented by M. Brust et al. describes a method of synthesizing alkanethiol-chemisorbed gold particles by using tetraoctylammonium as a phase transfer catalyst for reducing gold ions to gold in a two-phase system (J. Chem. Soc., Chem. Comm., 801, 1994). A report presented by K. V. Sarathy et al. describes that when gold ions are reduced by tetrakis (hydroxymethyl) phosphonium chloride and the ligand of the gold ions are then exchanged with dodecane thiol in an organic phase under acidic condition, clusters having a uniformed size (about 5 nm) are formed in a regular structure (Chem. Comm., 537, 1997).

As for physical property and structure are concerned, a report presented by R. H. Terrill et al. describes a result of the experimental in which thiols, each having a different alkyl chain length, are absorbed on gold particles and their solid-state properties are then measured (J. Am. Chem. Soc., 117, 12537, 1995). A report presented by M. Brust et al. describes conductive behavior of gold particles coated with dithiol by use of transmission electron micrograms showing structured gold particles (Adv. Mater., 7, 795, 1995). A report presented by S. Chen et al. describes conductive behavior of gold-thiol nanoparticles having different sizes by use of a scanning tunneling microscope (Science, 208, 2098, 1998). Further, a report presented by R. P. Anders et al. describes that when an I-V curve is measured by a scanning tunneling microscope after dithiols are arranged on (111) surface of gold and gold nanoparticles are then absorbed thereon, and that a Coulomb staircase based on single-electron tunneling derived from the sample has been observed (Science, 272, 1323, 1996). The aforementioned reports relate the synthesizing methods, electrical properties and self-assembled systems of gold particles.

As described above, various developments concerning functionalized gold particles having organic ligands have been attempted by taking advantage of the self-assembling property of gold particles. For example, Japanese Patent Laid-Open Publication No. Hei 09-278598 discloses a micelle type metal particle in which ansphiphilic organic material is absorbed on the surface of a metal particle to cover the particle in the form of a micellar structure, and applicability of this particle to metal particle materials, metal coating materials, gel particle materials, ultra-thin metal film producing apparatuses, optical-energy converting apparatuses or the like.

As described in Japanese Patent Laid-Open Publication No. Hei 06-45142, there is known a magnetic film being an organic film in which molecules forming a monomolecular film or built-up film is fixed directly or indirectly with a substrate through at least one of atoms selected from the group consisting of Si, Ge, Sn, Ti, Zr and Sc in the form of covalent binding, wherein the organic film includes unpaired electrons derived from a metal and/or radical, and exhibits magnetism. However, it would appear that the magnetic film has a critically weak magnetic interaction between the unpaired electrons because the metal and/or radical are bound through saturated hydrocarbon chains.

### DISCLOSURE OF INVENTION

In view of the above problem, it is therefore an object of the present invention to provide a method for manufacturing an organic-inorganic composite magnetic material having super-paramagnetism or ferromagnetism, and to open the way for applying organic materials to magnetic devices.

Given that a gold particle is a molecule, the gold particle may be used as a constituent molecule of a nanospin device. Based on this assumption, the inventors have introduced organic radicals into thiol to be chemisorbed on a gold particle, and investigated a magnetic interaction between conduction electrons and localized spins of the radicals, and finally achieved the present invention.

Specifically, the present invention provides a method for manufacturing an organic-inorganic composite magnetic material in which organic radical molecules, each having a localized spin derived from an unpaired electron of the radical, are chemisorbed on the surface of a metal substance, wherein.the respective localized spins of the organic radicals are ferromagnetically oriented by a magnetic interaction with conduction electrons of the metal substance.

The metal substance may be made of any metal capable of chemisorbing thiol thereon, such as Au (gold), Ag (silver), Pt (platinum), Pd (palladium), Rh (rhodium), Ru (ruthenium) or the like, and any alloy thereof. By coexisting such a metal substance with radicals each having a thiol group and any derivatives thereof, the organic radicals can be absorbed on the surface of the metal substance. For example, when the metal substance is made of gold, an organic-inorganic composite magnetic material composed of organic-radical chemisorbed gold particles each having thiol-substituted organic-radical molecules chemisorbed on the surface of the gold particle can be obtained.

Preferably, the organic radical is phenyl nitronyl nitroxide having a thiol group in its para position or any derivatives thereof, or phenyl nitroxide having a thiol group in its meta position or any derivatives thereof. However, the radical ligand in question is not limited to a radical having a thiol group as a substituent. For example, a radical having a substituent derived from disulfide or thiocarboxylic acid capable of being chemisorbed on the metal substance may be used.

The present invention also provides a method for manufacturing an organic-inorganic composite magnetic material, comprising the steps of reducing a metal salt with a reducing agent in the presence of a stabilizing ligand so as to form a soluble metal particle, and substituting the stabilizing ligand absorbed on the formed soluble metal particle with a thiol-substituted organic radical having an unpaired electron so as to synthesize an organic-radical absorbed metal particle. An applicable stabilizing ligand may include any ligand, such as alkanethiol, aromatic thiol, quaternary ammonium salt, quaternary phosphonium salt, polymers having a metal ligand as a side-chain, capable of providing a desired stabilization for preventing metal particles from assembling.

For synthesizing an organic-radical chemisorbed gold particle, it is preferable that hydrogen tetrachloroaurate is reduced with a reducing agent in the presence of a thiol-substituted organic radical having a long-chain alkyl group or any derivatives thereof to directly synthesize the organic-radical chemisorbed gold particle.

Furthermore, the present invention provides an organic-inorganic composite magnetic thin-film produced by using the organic-radical chemisorbed metal particles obtained from the aforementioned method, and an organic-inorganic composite ferromagnetic thin-film produced by adding a bridging ligand in the course of forming the film using the same metal particles.

Preferably, the organic-radical chemisorbed metal particles obtained from the aforementioned method is dissolved in an organic solvent by themselves or with a bridging ligand during its self-condensation, and the resulting solution is coated on a substrate to form an organic-inorganic composite magnetic thin-film. An applicable coating process may include a spin-coating process or a water-surface condensation process in which the film is self-condensed on a water surface.

Differently from prior arts, in the organic-inorganic composite magnetic material obtained from the manufacturing method according to the present invention, each of the unpaired electrons in the thiol-substituted organic radicals is chemisorbed directly on the metal particle through a π-conjugating bonds. This provides a desirable feature of creating a strong magnetic interaction between the chemisorbed radicals through the conduction electrons of the metal particle.

A desirable magnetism can be yielded to a nonmagnetic fine material having electrical conductivity by adding thiol-substituted radicals. In the resulting magnetic material, by virtue of the interaction with the conduction electrons in its metal substance, the respective unpaired electrons on the radicals are oriented in the same direction to achieve a ferromagnetic spin-arrangement. In particles each having conduction electrons, the unpaired electrons on each of the particles are ferromagnetically oriented to exhibit ferromagnetism. However, the magnitude of the resulting ferromagnetism is not uniformed between the particles. This non-uniformity can be eliminated by adding a bridging ligand having thiol groups at both ends to conjugate the electronic structures between the particles. Thus, the unpaired electrons can be uniformly oriented between the particles to provide a desirable ferromagnetic thin-film.

### BRIEF DESCRIPTION OF DRAWINGS

Fig. 1 is a schematic diagram of a gold particle having radicals absorbed thereon.
Fig. 2 is a conceptual diagram showing a process for chemically modifying a metal surface by use of thiol-substituted organic radicals.
Fig. 3 is an EPR (Electron Paramagnetic Resonance) spectrum of an organic-radical chemisorbed particle (solid).
Fig. 4 is a graph showing temperature dependence of an EPR signal intensity and a line width of an organic-radical chemisorbed particle.
Fig. 5 is a graph showing temperature dependence of a product (X ₚₐᵣₐ • T) derived from multiplying a magnetic susceptibility by a temperature of an organic-radical chemisorbed particle.
Fig. 6 is a schematic diagram of an ultra thin-film composed of particles exhibiting a ferromagnetic spin-arrangement, wherein Fig. 6 (a) illustrates a super-paramagnetic ultrathin-film, and Fig. 6 (b) illustrates a ferromagnetic ultrathin-film provided by conjugating the particles with bridging ligands.
Fig. 7 shows formulas 1, 2 and 3 in a manufacturing method of the present invention.

### BEST MODE FOR CARRYING OUT THE INVENTION

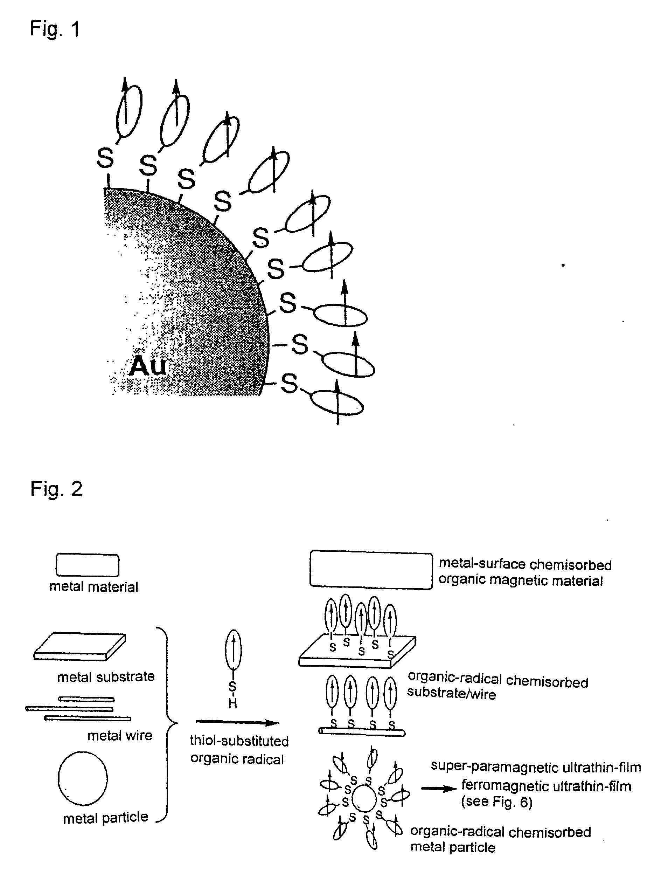

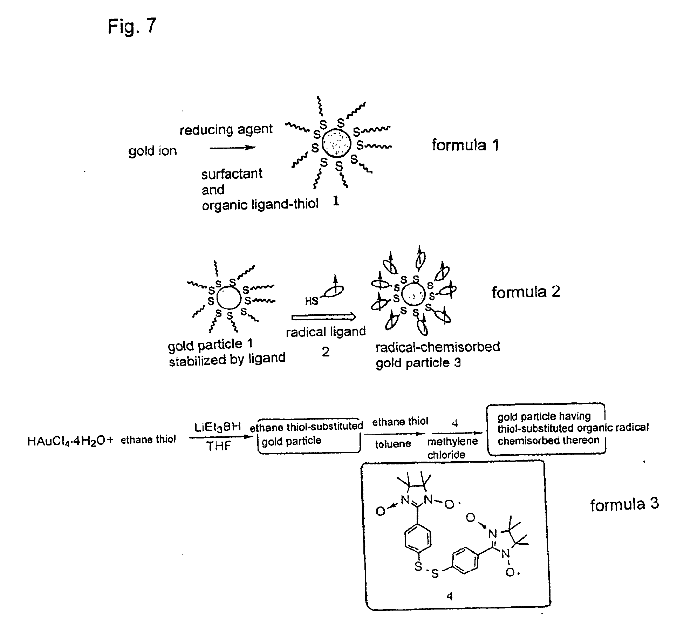

With reference to the drawings, an embodiment of the present invention will now be described in connection with an example using gold as a metal substance. Fig. 1 shows a model of a radical-absorbed gold particle serving as a magnetic material. This organic-radical chemisorbed gold particle can be synthesized according to a reaction path as shown in the formuli 1 and 2 of Fig. 7.

Specifically, hydrogen tetrachloroaurate is first reduced with a reducing agent in the presence of quaternary ammonium salt, alkanethiol or the like to synthesize a gold particle 1 stabilized by ligands. Then, organic radicals 2 each having thiol or any derivatives thereof as a substituent are added to undergo an exchange reaction of the ligands with the organic radicals so as to synthesize a gold particle 3 having the organic radicals chemisorbed thereon.

The radical ligand is not limited to thiol, and disulfide derivatives or thiocarboxylic acid derivatives capable of being chemisorbed on a metal substance may be used.

It is believed that thiol absorbed on gold typically exists as thiolate. Since a radical composed of thiolate and phenyl nitronyl nitroxide is a spin polarization donor, once this radical is chemisorbed on the gold particle, the radical polarizes the conduction band of the gold particle. This allows all of localized electrons to be ferromagnetically aligned.

### (Example)

A synthesizing method and a magnetic property of a chemisorbed gold particle will further be described in detail based on examples.

### Example 1

### [Synthesizing Method of Organic-Radical Absorbed Magnetic Gold Particles]

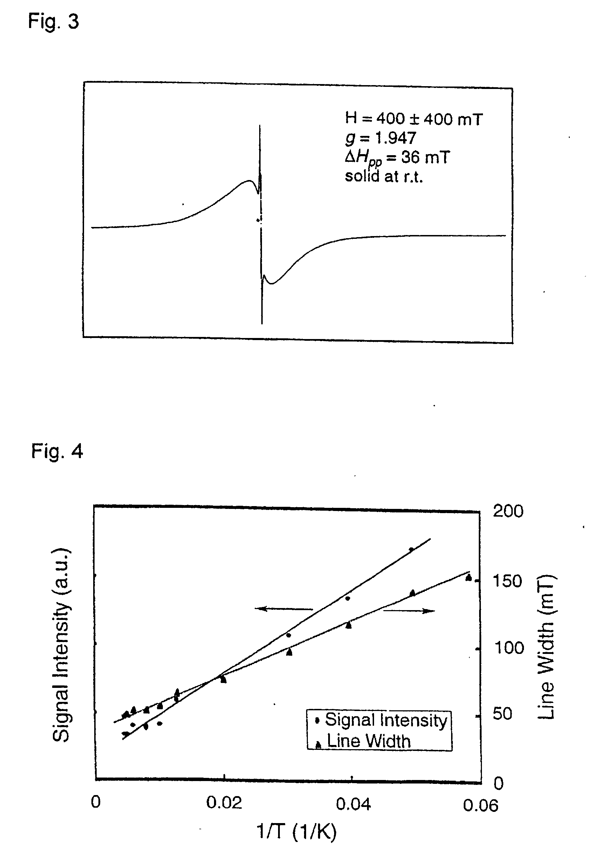

A synthesis was conducted according to the formula 3 shown in Fig. 3. Specifically, 1.0 g (2.4 mmol) of hydrogen tetrachloroaurate (HAuCl₄ • 4H₂O) was dissolved in 30 mL of dry tetrahydrofuran (THF). Then, after adding 0.54 mL (7.3 mmol) of ethanethiol, the solution was stirred under nitrogen atmosphere. 50 mL of THF solution (1.0 mol /L) including triethyllithium borohydride (LiEt₃BH) was dripped into the reaction solution for about 30 minutes while cooling the reaction solution in an ice bath.

After completing the drip of the reducing agent (triethyllithium borohydride), the ice bath was detached, and the solution was stirred one night at room temperature. During this process, the complex of hydrogen tetrachloroaurate and ethanethiol was reduced, and consequently gold particles having ethanethiol chemisorbed thereon were formed.

In order to separate the particles from inorganic ions in the solution by depositing the particles, 2 mL of ethanol and 10 mL of ice water were added. After stirring for one hour, a black power-type deposit was separated through filtration. The obtained black solids were suspended in 30 ml of toluene, and 0.2 mL of ethanethiol was added therein. After stirring the suspension for five minutes, 18 mL of methylene chloride solution including 164 mg (0.32 mmol) of radical disulfide having a structure designated as the numeral 4 in the formula 3 was added therein. After several minutes, gold particles (black solids) each having thiol-substituted organic radicals chemisorbed thereon were deposited. The deposited gold particles were then isolated.

By adding the thiol-substituted organic radicals in the form of disulfide to the deposited gold-alkanethiol particles, an exchange reaction including an oxidation-reduction process yielded organic-radical chemisorbed gold particles. In this process, if thiol-substituted organic radicals each having a long alkyl chain are used, these radicals can be chemisorbed directly on each of the gold particles without the aid of the ethanethiol.

### [Magnetic Property of Organic-Radical Chemisorbed Magnetic Gold Particles]

As shown in Fig. 3, an electron paramagnetic resonance (EPR) spectrum of the black-solid radical-chemisorbed magnetic gold particles at room temperature shows an absorption (g = 1.947, Δ Hₚₚ = 36 mT) having a wide half bandwidth derived from the radical-chemisorbed gold particles. Moreover, as shown in Fig. 4, temperature dependence of the absorption intensity (signal intensity) shows a Curie paramagnetic behavior at the temperature ranging from 20 K to 200 K. In addition, it is characteristic that the line width of the absorption spectrum is proportional to the reciprocal of the temperature value.

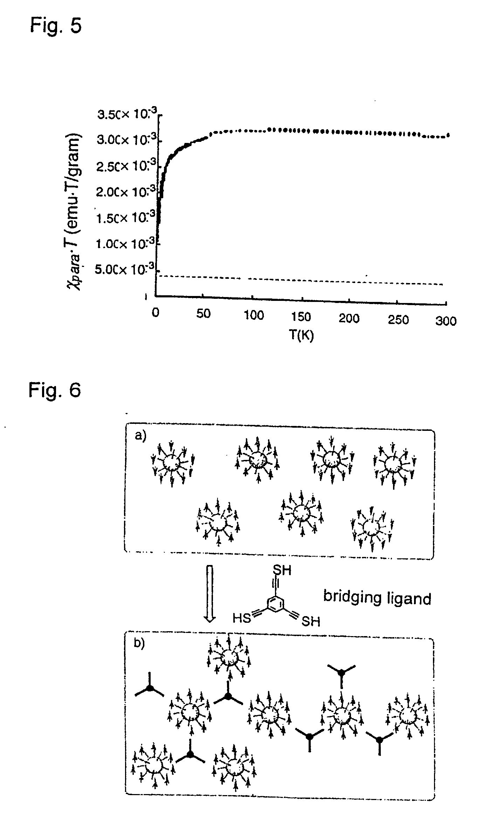

Fig. 5 shows temperature dependence of the magnetic susceptibility (Xₚ) determined by subtracting a temperature-independent magnetic susceptibility (components of diamagnetism, Pauli paramagnetism, ferromagnetism and the like) in the measurement of the magnetic susceptibility of the same sample as described above by use of a superconducting quantum interference device (SQUID). The broken line shows a Curie constant on the assumption that no magnetic interaction exists between organic radicals in a sample including gold and organic radicals at the ratio of 3:1.

As shown in Fig. 5, the Curie constant and the Weiss temperature are analyzed as 3 x 10⁻³ emuK / gram and -2.5 K, respectively. Based on this Curie constant, an average spin quantum number of about 8±3 is determined. This proves that the average number, about sixteen of the organic radicals absorbed on each one of the gold particles are ferromagnetically oriented with uniformed spin directions at room temperature.

Thus, the above measurement result of this example can be considered as evidence of the desired formation of the organic-radical chemisorbed gold particles exhibiting super-paramagnetism as shown in Fig. 6 (a). In this sample, the size of the gold particles and the number of the organic radicals chemisorbed on each one of the gold particles have a certain distribution. Thus, the spin quantum number also shows a certain distribution.

A magnetic gold particle chemisorbing thiol-substituted organic radials each having a long-chain alkyl group is soluble in an organic solvent. Thus, a magnetic thin-film can be produced by subjecting a solution of the magnetic gold particles to the spin coat process, or the water-surface condensation process in which the solution is suspended on a water surface and then the solvent is vaporized to assemble the gold particles on the water surface. The resulting thin film exhibits super-paramagnetism as the solid sample. Further, by adding bridging ligands to the organic solvent, a ferromagnetic thin film having the perfectly aligned direction of spins on the gold particles can be produced as shown in Fig. 6 (b).

### INDUSTRIAL APPLICABILITY

As described above, the present invention provides a composite material of organic radical molecules and a metal substance serving as an inorganic component, and in particular, realizes a super-paramagnetic material by utilizing a magnetic interaction between unpaired electrons of the organic radicals and conduction electrons of the metal substance to orient the unpaired electrons of the organic radicals ferromagnetically. Further, the present invention provides a novel organic-inorganic composite ferromagnetic material by conjugating these super-paramagnetic metal particles through bridging ligands to form a thin film exhibiting ferromagnetism.

An applicable form of the metal substrate may include a metal thin-film, nanometer level of particle, micro-fabricated metal wire, or electrode pattern. Thus, the magnetic material according to the present invention can be extensively used in magnetic devices of various microelectronic devices.

## Claims

1. A method for manufacturing an organic-inorganic composite magnetic material, said method comprising the steps of:
reducing a salt including a metal ion with a reducing agent in the presence of a chemically stabilizing ligand so as to form a soluble metal particle, said metal allowing thiol to be absorbed thereon, and
substituting said stabilizing ligand absorbed on said formed soluble metal particle with a thiol-substituted organic radical having an unpaired electron so as to synthesize an organic-radical absorbed metal particle.

2. A method for manufacturing an organic-inorganic composite magnetic material as defined in claim 1, wherein said step for synthesizing an organic-radical chemisorbed gold particle includes the step of reducing hydrogen tetrachloroaurate with a reducing agent in the presence of a thiol-substituted organic radical having a long-chain alkyl group or any derivatives thereof to directly synthesize the organic-radical chemisorbed gold particle.

3. An organic-inorganic composite magnetic thin-film produced by using the organic-radical chemisorbed metal particles obtained from the method as defined in claim 1 or 2.

4. An organic-inorganic composite ferromagnetic thin-film produced by adding a bridging ligand to the organic-radical chemisorbed metal particles obtained from the method as defined in claim 1 or 2, in the course of forming the film.

5. An organic-inorganic composite magnetic thin-film produced by dissolving the organic-radical chemisorbed metal particles obtained from the method as defined in claim 1 or 2, in an organic solvent by themselves or with a bridging ligand, and then coating the resulting solution on a substrate.
